**Europäisches Patentamt**

**European Patent Office**

**Office européen des brevets**

(19)

(11) Veröffentlichungsnummer: **0 008 409**
**B1**

(12) **EUROPÄISCHE PATENTSCHRIFT**

(45) Veröffentlichungstag der Patentschrift:
07.07.82

(51) Int. Cl.³: **C 08 F 4/02**

(21) Anmeldenummer: **79102870.7**

(22) Anmeldetag: **08.08.79**

(54) **Metallhaltige lösliche polymere Katalysatoren für Polymerisationen, Verfahren zur Herstellung derselben und ihre Verwendung in Polymerisationsverfahren.**

(30) Priorität: **17.08.78 DE 2835944**

(43) Veröffentlichungstag der Anmeldung:
**05.03.80 Patentblatt 80/5**

(45) Bekanntmachung des Hinweises auf die Patenterteilung:
**07.07.82 Patentblatt 82/27**

(84) Benannte Vertragsstaaten:
**AT BE CH DE FR GB IT LU NL SE**

(56) Entgegenhaltungen:
**DE-A-1 951 743**
**DE-A-2 022 488**
**DE-A-2 435 609**
**GB-A-1 020 051**
**GB-A-1 520 665**

(73) Patentinhaber: **HEYL & CO., Chem.-Pharm. Fabrik,
Goerzallee 253, D-1000 Berlin 37 (DE)**

(72) Erfinder: **Bayer, Ernst, Dr. Prof., Bei der
Ochsenweide 17, D-7400 Tübingen (DE)**
Erfinder: **Kutubuddin, Mohamed, Dipl.-Chem.,
Viktor-Renner-Strasse 2, D-7400 Tübingen (DE)**

(74) Vertreter: **Kinzebach, Werner, Dr., Patentanwälte
Reitstötter, J., Prof.Dr.Dr.; Kinzebach, W., Dr.; Höller,
K.P., Dr.; Bauerstrasse 22 P.O. Box 780,
D-8000 München 43 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

ACTORUM AG

Metallhaltige lösliche polymere Katalysatoren für Polymerisationen, Verfahren zur Herstellung derselben und ihre Verwendung in Polymerisationsverfahren

Die Erfindung betrifft metallhaltige, lösliche polymere Polymerisationskatalysatoren, ein Verfahren zur Herstellung derselben sowie die Verwendung dieser Katalysatoren zur Polymerisation in homogener Lösung.

Niedermolekulare, homogene Polymerisationskatalysatoren sind für die Polymerisation vieler Monomerer zu Makromolekülen vorgeschlagen und benutzt worden. Dies gilt für radikalische, anionische und kationische Katalysatoren und die metallorganischen Mischkatalysatoren. Schwierigkeiten bei homogenen Polymerisationskatalysatoren bereitet oft die Abtrennung von Katalysator und Polymer. Hierdurch werden die Eigenschaften der Kunststoffe ungünstig beeinflusst oder aufwendigere Trennungen sind notwendig.

Aufgabe der vorliegenden Erfindung ist die Bereitstellung polymerer Polymerisationskatalysatoren für homogene Polymerisationen in Lösung unter milden Bedingungen, die sich leicht vom gebildeten Polymerisat abtrennen lassen und verbesserte Kunststoffe ergeben.

Überraschenderweise wurden jetzt polymere, metallhaltige Polymerisationskatalysatoren gefunden, die gekennzeichnet sind durch ein organisches Basispolymer, das über funktionelle Gruppen gebundene Metalle, Metallionen oder Metallkomplexe enthält.

Die mit den neuen erfindungsgemässen Polymerisationskatalysatoren hergestellten Polymere zeichnen sich dadurch aus, dass sie wenig durch Katalysatoren verunreinigt sind oder die Trennung des Polymers vom Katalysator leicht durchgeführt werden kann. Die mit diesen Katalysatoren hergestellten Kunststoffe zeichnen sich durch verbesserte Werkstoffeigenschaften aus, und es können lineare Polymere mit hohen Molekulargewichten bis zu mehreren Millionen erhalten werden.

Die erfindungsgemässen Katalysatoren enthalten als Basispolymer Polyvinylalkohole, Polyvinylether, Polyvinylamine, Polyvinylpyrrolidone, Polyester, Polyurethane, Polyacrylsäure, Polymethacrylsäure, Polystyrol, Polyethylenglykole, Polypropylenglykole oder Polyethylenimine oder Mischpolymerisate bzw. Mischkondensate der entsprechenden Monomeren, die in Wasser oder organischen Lösungsmitteln löslich sind.

An die Hydroxyl-, Carboxyl-, Aminofunktion der genannten Basispolymere werden zur Darstellung der Katalysatoren erfindungsgemäss Metalle, Metallionen, Metallsalze oder Metallkomplexe aus den Haupt- oder Nebengruppen des Periodensystems gebunden oder adsorbiert. Oft ist es erfindungsgemäss notwendig, die Basispolymere vor der Umsetzung mit der Metallkomponente noch weiter zu funktionalisieren. So kann erfindungsgemäss durch Funktionalisierung des Polystyrols zu Poly-(p-Hydroxymethylstyrol) ein zur Darstellung von homogenen Polymerisationskatalysatoren geeignetes Polymer erhalten werden. Als weitere metallbindende Funktionen am Polymer kommen neben den bereits genannten Hydroxyl-, Amino- und Carboxylgruppen erfindungsgemäss noch Imino-, Carboxyl-, Triarylphosphin-, Trialkylphosphin-, Aryl-alkylphosphin- und/oder Mercaptogruppen in Frage. Die Molekulargewichtsgrenzen der erfindungsgemässen löslichen Polymerisationskatalysatoren können in weiten Grenzen schwanken. Molekulargewichte unter 1000 bringen im allgemeinen keine Vorteile, da die hierbei gewinnbaren Polymere zu relativ unreinen Polymerisaten führen. Die obere Grenze des Molekulargewichts wird durch die Löslichkeit beschränkt. Bei linearen Polymeren liegt diese Grenze im allgemeinen unter 10 Millionen. Erfindungsgemäss haben sich vor allem lineare oder wenig verzweigte Makromoleküle als Ausgangspolymere zur Darstellung der metallhaltigen Polymerisationskatalysatoren bewährt.

Als Metallkomponente enthalten die erfindungsgemässen Katalysatoren vorzugsweise ein Metall der 3. bis 8. Nebengruppe oder der 3. und 4. Hauptgruppe des Periodensystems, insbesondere Ti, U, V, Zr, Co, Ni, Cr, Mo, W, Al, Zn und/oder Fe enthalten.

Die zur Darstellung der löslichen, makromolekularen Polymerisationskatalysatoren verwendeten Polymere binden das Metallion durch mindestens eine funktionelle Gruppe des Polymeren, während bei Komplexen die restlichen Koordinationsstellen bis zur maximalen Koordinationszahl durch niedermolekulare Liganden abgesättigt werden. Vorteilhafte Liganden sind CO, Phosphine insbesondere Alkyl- und/oder Arylphosphine, Halogene bzw. Halogenide, Cyanid, Olefine, Aromaten, insbesondere Benzol, Cyclopentadienyl und Donormoleküle der 5. oder 6. Hauptgruppe des Periodensystems. Die makromolekularen metallhaltigen Polymerisationskatalysatoren können neutral, als Anion oder als Kation vorliegen.

Zur Darstellung der Katalysatoren wird erfindungsgemäss das Basispolymer in wässriger Lösung oder gelöst in organischen Lösungsmitteln mit Metallsalzen oder Metallkomplexen umgesetzt. Die Metalle werden gebunden, und eventuelle Überschüsse niedermolekularer Metallverbindungen werden durch Ultrafiltration abgetrennt. Die so dargestellten polymeren Metallkatalysatoren können erfindungsgemäss in vielen Fällen ohne weitere Reinigung verwendet werden. Eine weitere Reinigung der polymeren Metallkatalysatoren kann durch Ausfällen, Umkristallisation, Extraktion oder Chromatographie erfolgen. Als Metallverbindungen zur Umsetzung mit den Polymeren können beliebige Salze oder Komplexe der Metalle der Nebengruppen und Hauptgruppen des Periodensystems der Elemente verwendet werden. Besondere katalytische Aktivität weisen erfindungsgemäss polymere Titan-, Vanadium-, Chrom-, Aluminium-, Uran-, Zinn-, Eisen-, Kobalt-und Nickelkatalysatoren auf.

In der nachfolgenden Tabelle sind einige bevorzugte Basispolymere der vorliegenden Erfindung zusammengefasst.

| Basispolymer | Funktionalisierung des Basispolymers durch folgende Gruppen |
|---|---|
| 1. Polystyrol | $-(CH_2)_n-OH$ (n = 1–5)<br>$-NH_2$<br>$-(CH_2)_n-NH_2$ (n = 1,2))<br>$-\underset{\underset{OH}{\mid}}{CH}-CH_3$<br>$-COOH$ |
| 2. Poly-Allylalkohol | $-OH$ |
| 3. Polyvinylalkohol | $-OH$ |
| 4. Polyacrylsäure | $-COOH$ |
| 5. Polyvinylamin | Aminogruppen, Aldimin |
| 6. Polyethylenimin | prim. sek. tert. Aminogruppen<br>Aldiminogruppen<br>Iminodiessigsäure |
| 7. Copolymere aus 1 und 3 | $-OH$ |
| 8. Copolymere aus 1 und 2 | $-OH$ |
| 9. Copolymere aus 1 und 4 | $-COOH$ |
| 10. Polyethylenglykol | |
| 11. Polypropylenglykol | |
| 12. Polyoxymethylen | $-OH$ |
| 13. Polybutylenglykol | |
| 14. Copolymere aus 10 und 11 | |
| 15. Polyvinylpyrrolidinon | Amidgruppe |
| 16. Hydrolysiertes Polyvinyl-pyrrolidinon | Amid, COOH- und NH-Gruppen |
| 17. Polyvinylpyridin | Pyridingruppe |

Beispiele für bevorzugte Metalle mit weiteren niedermolekularen Liganden, die an Basispolymere des obigen Typs gebunden werden können, sind:

- $Cpd_2TiCl_n$    (n = 1,2)
- $CpdTiCl_n$    (n = 2,3)
- $TiCl_n$    (n = 3,4)
- $CoCl_n$    (n = 1–3)
- $AlX_3$    (X = Cl, Br)
- $VCl_n$    (n = 2–4)
- $ZrX_n$    (X = Cl, Br; n = 3,4)
- $MoCl_n$    (n = 4,5)
- $UCl_3$
- $WCl_3$
- $CrCl_n$    (n = 2,3)
- $FeCl_n$    (n = 2,3)
- $Ti(OR)_3$    (R = $C_2H_5$; i-Propyl, n-Propyl)
- $NiX_n$    (X = Cl, CN, Br; n = 1,2)

Die nach der Erfindung hergestellten polymeren, löslichen Metallkatalysatoren vermögen erfindungsgemäss Polymerisationen von Ethylen und beliebigen substituierten Ethylenen zu katalysieren. Hierzu werden die Katalysatoren in organischen Lösungsmitteln oder Wasser gelöst. Zur Lösung wird das jeweilige Monomer gegeben. Die Reaktion kann bei Raumtemperatur und Normaldruck oder bei hoher Temperatur und unter Druck ausgeführt werden. Das ausgeschiedene Polymer wird durch Filtration oder Dekantieren entfernt. Die Polymerisation kann auch kontinuierlich geführt werden, indem ständig das Monomer zugegeben wird und das Polymer kontinuierlich ausgetragen wird.

Mit diesen neuen polymeren Metallkatalysatoren nach der Erfindung wurden folgende Monomere umgesetzt: Ethylen, Propylen, Vinylacetat, Vinylaminderivate, Acrylsäureester, Methacrylsäureester, Butadien sowie Alkylbutadiene, Allylverbindungen, Acrylnitril, halogenierte Ethylene, Ethylenoxid, Styrol sowie Gemische verschiedener Monomerer. Erfindungsgemäss werden Polymerisate dieser Monomere bzw. Copolymerisate aus verschiedenen Monomeren erhalten. Die Polymerisationen können in Lösung oder als Fällungspolymerisationen kontinuierlich oder diskontinuierlich durchgeführt werden. Bei diesen Polymerisationen werden überwiegend lineare Polymere erhalten, wobei erfindungsgemäss die Polymerisation so gesteuert werden kann, dass Polymere sehr hohen Molekulargewichts, bis $10^7$, erhalten werden. Die Katalysatoren können immer wieder für Polymerisationen eingesetzt werden, da sie über längere Zeiten hinweg nicht desaktiviert werden und aufgrund ihrer Löslichkeitseigenschaften nicht an das Polymer gebunden oder adsorbiert werden.

Zur Polymerisation werden polymerer Katalysator und zu polymerisierendes Polymer im Molverhältnis zwischen $10^{-2}$ bis $10^{-6}$ eingesetzt.

Die folgenden Beispiele sollen die Erfindung verdeutlichen, ohne sie zu begrenzen.

Beispiel 1

Darstellung eines Polyäthylenglykol-gebundenen Cyclopentadiendichloro-Titan-Katalysators:

Verwendet werden bei der Darstellung des Titankatalysators Polyäthylenglykole der Molekulargewichte 1000, 2000, 3000, 6000, 10 000 und 20 000, die alle nach der gleichen Vorschrift umgesetzt werden. Die Polyäthylenglykole (PEG) werden jeweils vorher durch Umfällen aus Benzol oder Tetrahydrofuran mit Diäthyläther gereinigt und im Hochvakuum über $P_4O_{10}$ längere Zeit getrocknet. In manchen Fällen erweist sich auch noch eine Ultrafiltration des PEG als notwendig.

0,5 mMol des Polyäthylenglykols oben angegebener Molekulargewichte werden in 70–100 ml Benzol gelöst und dazu unter Luft- und Feuchtigkeitsausschluss 1,2 mMol CpdTiCl$_3$ (Cpd = Cyclopentadien) in 20–60 ml Tetrahydrofuran langsam zugetropft. Insgesamt lässt man 5 Std. unter Rückfluss reagieren. Danach wird mit Diäthyläther ausgefällt, in Benzol/Tetrahydrofuran wieder aufgelöst und nochmals mit Diäthyläther ausgefällt. Die Ausbeuten betragen zwischen 64–90% des theoretisch berechneten Titangehaltes (theoretisch: 2 Titan je Mol PEG; gefunden 1,3–1,8 Mol Ti).

Beispiel 2

Darstellung eines PEG-gebundenen Dicyclopentadien-monochlor-Titan-Komplexes:

Entsprechend der Beschreibung in Beispiel 1 werden 0,5 mMol Polyäthylenglykol mit 1,2 mMol Cpd$_2$TiCl in 40 ml Tetrahydrofuran umgesetzt. Ausbeute 90% PEG-(TiCpd$_2$Cl)$_2$ mit 1,8 Mol Titangehalt je Mol PEG.

Beispiel 3

Darstellung eines PEG-Aluminiumchlorid-Katalysators:

2 mMol PEG der in Beispiel 1 genannten Molekulargewichte werden entsprechend der Vorschrift in Beispiel 1 mit 4 mMol AlCl$_3$ in 40 ml Tetrahydrofuran 5 Std. am Rückfluss gekocht, 2mal mit Diäthyläther umgefällt und über $P_4O_{10}$ getrocknet. Ausbeute: 90% PEG-Aluminiumchloridkatalysator, Aluminiumgehalt: 1,3 Mol Al pro Mol PEG.

Beispiel 4

Darstellung von PEG-Aluminiumalkylen:

0,5 mMol des nach Beispiel 3 erhaltenen PEG-(AlCl$_2$)$_2$ wird in THF unter absolutem Luft- und Feuchtigkeitsausschluss gelöst. Unabhängig davon bereitet man unter Luft- und Feuchtigkeitsausschluss aus Lithium und Alkyljodid etwa 1,2 mMol einer Lösung von Lithiumalkyl in Tetrahydrofuran. Diese Lösung wird filtriert und zur PEG-(AlCl$_2$)$_2$-Lösung gegeben und 1 ½ Std. bei Raumtemperatur gerührt. Danach wird unter Luftausschluss mit Diäthyläther ausgefällt. Aluminiumgehalt: 1,25 Mol Al pro Mol PEG.

Beispiel 5

Darstellung von PEG-gebundenen Halogenometallverbindungen aus dem PEG-Dinatriumsalz und Metallhalogeniden:

Die Darstellung des Natriumsalzes der Polyäthylenglykole verschiedenen Molekulargewichtes (1000–20 000) geschieht bei strengstem Ausschluss von Feuchtigkeit unter Reinststickstoff oder Argon. Als Lösungsmittel dient ketylgereinigtes und mit Stickstoff gesättigtes Tetrahydrofuran. 1 mMol Polyäthylenglykol wird jeweils mit einem 4fachen Überschuss einer 50%igen Natriumdispersion 1 Std. bei Raumtemperatur reagieren gelassen. Danach wird vom überschüssigen Natrium abfiltriert. Das so bereitete Natriumsalz kann durch Fällung isoliert werden. Zur Umsetzung mit den Metallhalogeniden kann jedoch die vom Natrium abgetrennte Lösung besser direkt weiterverarbeitet werden.

Man setzt hierzu die aus 1 mMol PEG bereitete Lösung des Dinatriumsalzes mit 2 mMol der in der Tabelle genannten Metallsalze bei Raumtemperatur unter Schutzgas und Wasserausschluss direkt um. Die Umsetzung ist innerhalb 1–2 d vollständig. Es wird vom ausgefallenen Natriumhalogenid abfiltriert und die polymere Metallhalogenverbindung durch Diäthyläther ausgefällt. Eine weitere Reinigung ist durch Ultrafiltration möglich.

Beispiel 6

Synthese eines Dicyclopentadien-dichloro-Titan(IV)-Komplexes mit kovalenter Fixierung eines Cyclopentadienylrestes an Polystyrol:

Als Ausgangsmaterial wird lineares Polystyrol vom Molgewicht 34 000 verwendet, das in üblicher Weise so chlormethyliert wird, dass etwa 5% der theoretisch möglichen Chlormethylgruppen in das Polystyrol eingeführt werden.

5 g chlormethyliertes Polystyrol werden unter Luft- und Feuchtigkeitsausschluss in 100 ml THF gelöst und 0,35 g Natriumcyclopentadienyl zugegeben und 1 Tag bei Raumtemperatur reagieren gelassen. Das Polymer wird durch Ultrafiltration gereinigt. Ausbeute: 4,7 g.

Tabelle
Nach der Vorschrift in Beispiel 5 dargestellte Metallverbindungen (Lösungsmittel immer Tetrahydrofuran)

| Vorgeschlagene Struktur | mMol PEG-Na in situ dargestellt | mMol Metall-halogenid eingesetzt | Ausbeute | Metallgehalt der Theorie |
|---|---|---|---|---|
| PEG-(CpdTiCl$_2$)$_2$ | 0,5 mMol | 1,0 CpdTiCl$_3$ | 90% | 75% |
| PEG-(Cpd$_2$TiCl) | 1,0 mMol | 2,0 Cpd$_2$TiCl$_2$ | 95% | 65% |
| PEG-(TiCl$_3$)$_2$ | 2,0 mMol | 4,0 TiCl$_4$ | 85% | 87% |
| PEG-(CoCl)$_2$ | 1,0 mMol | 2,0 CoCl$_2$ | 91% | 82% |
| PEG-(V Cl$_2$)$_2$ | 1,0 mMol | 2,0 VCl$_3$ | 86% | 72% |
| PEG-(VOCL$_2$)$_2$ | 0,5 mMol | 1,0 VOCl$_3$ | 95% | 70% |
| PEG-(AlCl$_2$)$_2$ | 0,5 mMol | 1,0 AlCl$_3$ | 85% | 88% |
| PEG-(ZrCl$_3$)$_2$ | 0,5 mMol | 1,0 ZrCl$_4$ | 96% | 92% |
| PEG-(UCl$_3$)$_2$ | 0,5 mMol | 1,0 UCl$_4$ | 70% | 68% |
| PEG-(MoCl$_4$) | 0,5 mMol | 1,0 MoCl$_5$ | 83% | 70% |

Danach wird mit in situ bereitetem Methyllithium das Anion des Poly(-cyclopentadienyl-methyl-styrols) als Lithiumsalz in THF dargestellt.

Ausbeute: 4,5 g. 4,5 g Lithiumsalz werden mit 0,218 g Cyclopentadienyltitantrichlorid in THF umgesetzt. Ausbeute: 4 g mit 80% d.Th. Ti (1,5–1,7% Ti).

Beispiel 7

Darstellung eines Poly(hydroxymethylstyrol-trichloro-titan(IV))-Komplexes:

21 g nach üblichen Verfahren hergestellten hydroxymethylierten Polystyrols (Molgewicht 34 000) mit einer Beladung von 5% der theoretisch möglichen Hydroxymethylgruppen werden mit 0,04 Mol Titantetrachlorid in Benzol/Tetrahydrofuran 10 Std. bei Raumtemperatur reagieren gelassen unter strengem Feuchtigkeitsausschluss. Danach wird 36 Std. durch eine Polyimidmembran (Ausschlussgrenze Mol.-Gew. 10 000) ultrafiltriert. Überschüssiges Titantetrachlorid und die beim Ligandenaustausch gebildete HCl werden hierbei entfernt. Der im Retendat verbleibende polymere Titankomplex kann in Lösung als Katalysator direkt eingesetzt werden. Zur Reingewinnung in Substanz wird das Retendat im Vakuum zur Trokkene gedampft. Ausbeute: 19,5 g polymerer Titankomplex mit 1,8% Ti.

Beispiel 8

Fällungspolymerisation von Styrol mit PEG-(TiCpdCl$_2$)$_2$ bei Raumtemperatur:

0,5 g nach Beispiel 1 dargestellter Katalysator werden in 50 ml Methanol unter Luft- und Feuchtigkeitsausschluss durch Erwärmen gelöst (½ min bei 40 °C) und 25 ml Styrol zugegeben. Anschliessend wird nochmals evakuiert und unter Schutzgas (N$_2$/Argon) bei Raumtemperatur gerührt. Nach 5–7 Tagen wird das ausgefällte Polymer abgenutscht. Ausbeute: 9–14 g Polystyrol.

Das Filtrat enthält den Katalysator. Er kann erneut mit Monomer versetzt werden und die Polymerisation beliebig oft über Monate hinweg unter gleichen Bedingungen wiederholt werden. Hierbei tritt kein Verlust an Katalysatoraktivität auf. Das gebildete Polystyrol hat nach Gelpermeations-Chromatographie und Lichtstreuungsmessungen Molekulargewichte von 5–6·10$^6$. Die in den Beispielen 2–5 beschriebenen Katalysatoren können ebenfalls unter analogen Bedingungen eingesetzt werden. Anstelle von Methanol bzw. Ethanol können auch Lösungsmittel wie Tetrahydrofuran, Benzol, Toluol, Xylol benutzt werden. Die Molekulargewichte liegen dann niedriger. Bei hoher Temperatur werden kleinere Polymerisationszeiten erhalten.

Beispiel 9

Fällungspolymerisation von Acrylnitril mit PEG-(TiCpdCl$_2$)$_2$ bei Raumtemperatur:

0,5 g nach Beispiel 1 dargestellter Katalysator werden in 15 ml Methanol unter Luft- und Feuchtigkeitsausschluss durch Erwärmen gelöst (½ min bei 40 °C) und 25 ml Acrylnitril zugegeben. Anschliessend wird nochmals evakuiert und unter Schutzgas (N$_2$/Argon) bei Raumtemperatur gerührt. Nach 3 Tagen wird das ausgefällte Polymer abgenutscht. Ausbeute: 14–16 g Polyacrylnitril

Das Filtrat enthält den Katalysator. Er kann erneut mit Monomer versetzt werden und die Polymerisation beliebig oft über Monate hinweg unter gleichen Bedingungen wiederholt werden. Hierbei tritt kein Verlust an Katalysatoraktivität auf. Das gebildete Polyacrylnitril hat ein Molekulargewicht von 3–6·10$^6$. Die in den Beispielen 2–5 beschriebenen Katalysatoren können ebenfalls unter analogen Bedingungen eingesetzt werden. Anstelle von Methanal bzw. Ethanol können auch Lösungsmittel wie Benzol, Toluol und Xylol verwendet werden. Die Molekulargewichte liegen ähnlich hoch. Für hohe Temperaturen werden kleine Polymerisationszeiten erhalten.

Beispiel 10

Fällungspolymerisation von Methacrylsäure-methylester mit PEG(TiCpdCl$_2$)$_2$ bei Raumtemperatur:

0,5 g nach Beispiel 1 dargestellter Katalysator werden in 60 ml Methanol unter Luft- und Feuchtigkeitsausschluss durch Erwärmen gelöst (½ min bei 40 °C) und 25 ml Methacrylsäuremethylester zugegeben. Anschliessend wird nochmals evakuiert und unter Schutzgas (N$_2$/Argon) bei Raumtemperatur gerührt. Nach 3 Tagen wird das ausgefällte Polymer abgenutscht. Ausbeute: 15–17 g Polymethacrylsäuremethylester.

Das Filtrat enthält den Katalysator. Er kann erneut mit Monomer versetzt werden und die Polymerisation beliebig oft über Monate hinweg unter gleichen Bedingungen wiederholt werden. Hierbei tritt kein Verlust an Katalysatoraktivität auf. Der gebildete Polymethylacrylsäuremethylester hat nach Gelpermeations-Chromatographie und Lichtstreuungsmessungen Molekulargewichte von 5–6·10$^7$. Die in den Beispielen 2–5 beschriebenen Katalysatoren können ebenfalls unter analogen Bedingungen eingesetzt werden. Anstelle von Methanol und Ethanol können auch Lösungsmittel wie Benzol, Toluol, Tetrahydrofuran, Xylol und Aceton verwendet werden. Die Molekulargewichte liegen auch ähnlich hoch. Bei höheren Temperaturen werden kleinere Polymerisationsgrade bei kürzeren Reaktionszeiten erhalten.

Beispiel 11

Fällungspolymerisation von Acrylnitril mit Mischkatalysator:

1 g PEG-(Cl$_2$)$_2$ nach Beispiel 5 und 0,5 g PEG-

$(Al{<}^{CH_3}_{CH_3})_2$ nach Beispiel 4 dargestellte Katalysatoren werden in 50 ml Benzol unter Luft- und Feuchtigkeitsausschluss durch Erwärmen gelöst (½ min bei 40°C) und 50 ml Acrylnitril zugegeben. Anschliessend wird nochmals evakuiert und unter Schutzgas (N$_2$/Argon) bei Raumtemperatur gerührt. Nach 3 Tagen wird das ausgefällte Polymer abgenutscht. Ausbeute: 28–30 g Polyacrylnitril

Das Filtrat enthält den Katalysator. Das gebildete Polyacrylnitril hat ein Molekulargewicht nach Gelpermeations-Chromatographie und Lichtstreuungsmessungen von 5–6·10$^7$. Die Titankatalysatoren können ebenfalls mit PEG-(Al(CH$_3$)$_2$)$_2$ unter analogen Bedingungen eingesetzt werden. Anstelle von Benzol kann auch Toluol als Lösungsmittel eingesetzt werden.

Beispiel 12

Fällungspolymerisation von Isopren mit PEG-(UCl$_3$)$_2$:

0,5 g nach Beispiel 5 dargestellter Katalysator werden in 25 ml Methanol unter Luft- und Feuchtigkeitsausschluss durch Erwärmen gelöst (½ min bei 40°C) und 25 ml Isopren zugegeben. Anschliessend wird nochmals evakuiert und unter Schutzgas (N$_2$/Argon) bei Raumtemperatur gerührt. Nach 5 Tagen wird das ausgeschiedene Öl abgetrennt. Ausbeute: 3–4 g Polyisopren (MG < 10 000).

Beispiel 13

Copolymerisation von Styrol-Acrylnitril mit PEG-(TiCpdCl$_2$)$_2$ bei Raumtemperatur:

0,5 g nach Beispiel 1 dargestellter Katalysator werden in 25 ml Methanol unter Luft- und Feuchtigkeitsausschluss durch Erwärmen gelöst (½ min bei 40°C) und 25 ml Styrol und 15 ml Acrylnitril zugegeben. Anschliessend wird nochmals evakuiert und unter Schutzgas (N$_2$/Argon) bei Raumtemperatur gerührt. Nach 5–7 Tagen wird das ausgefällte Polymer abgenutscht. Ausbeute: 18–19 g Styrol-Acrylnitril-Copolymer.

Das gebildete Copolymer hat nach Gelpermeations-Chromatographie und Lichtstreuungsmessungen Molekulargewicht von 3–4·10$^6$. Die in den Beispielen 2–5 beschriebenen Katalysatoren können ebenfalls unter analogen Bedingungen eingesetzt werden.

Beispiel 14

Copolymerisation von Styrol-Methacrylsäuremethylester mit PEG(TiCpdCl$_2$)$_2$ bei Raumtemperatur:

0,5 g nach Beispiel 1 dargestellter Katalysator werden in 50 ml Methanol unter Luft- und Feuchtigkeitsausschluss durch Erwärmen gelöst (½ min bei 40°C) und 25 ml Styrol und 15 ml Methacrylsäuremethylester zugegeben. Anschliessend wird nochmals evakuiert und unter Schutzgas (N$_2$/Argon) bei Raumtemperatur gerührt. Nach 5 Tagen wird das ausgefällte Polymer abgenutscht. Ausbeute: 18–20 g Styrol-Methacrylsäuremethylester Copolymer.

Das gebildete Copolymer hat nach Gelpermeations-Chromatographie und Lichtstreuungsmessungen Molekulargewichte von 3–4·10$^6$. Die in den Beispielen 2–5 beschriebenen Katalysatoren können ebenfalls unter analogen Bedingungen eingesetzt werden.

Beispiel 15

Copolymerisation von Acrylnitril-Methacrylsäuremethylester mit PEG(TiCpdCl$_2$)$_2$ bei Raumtemperatur:

0,5 g nach Beispiel 1 dargestellter Katalysator werden in 50 ml Methanol unter Luft- und Feuchtigkeitsausschluss durch Erwärmen gelöst (½ min bei 40°C) und 25 ml Acrylnitril und 15 ml Methacrylsäuremethylester zugegeben. Anschliessend wird nochmals evakuiert und unter Schutzgas (N$_2$/Argon) bei Raumtemperatur gerührt. Nach 3–4 Tagen wird das ausgefällte Polymer abgenutscht. Ausbeute: 20–21 g vom Molekulargewicht 2–4·10$^6$.

Beispiel 16

Copolymerisation von Styrol-Vinylacetat mit PEG(TiCpdCl$_2$)$_2$ bei Raumtemperatur:

0,5 g nach Beispiel 1 dargestellter Katalysator werden in 25 ml Benzol unter Luft- und Feuchtigkeitsausschluss durch Erwärmen gelöst (½ min bei 40°C) und 25 ml Styrol und 1,5 ml Vinylacetat zugegeben. Anschliessend wird nochmals evakuiert und unter Schutzgas (N$_2$/Argon) bei Raumtemperatur gerührt. Nach 7 Tagen wird das Polymer mit Methanol ausgefällt. Ausbeute: 6–8 g.

Beispiel 17

Fällungspolymerisation von Acrylnitril mit Polystyrol-gebundenem Titanocendichlorid bei Raumtemperatur:

0,5 g nach Beispiel 6 dargestellter Katalysator werden in 25 ml Benzol unter Luft- und Feuchtigkeitsausschluss gelöst und 25 ml Acrylnitril zugegeben. Anschliessend wird nochmals evakuiert und unter Schutzgas (N₂/Argon) bei Raumtemperatur gerührt. Nach 9 Tagen wird das ausgefällte Polymer abfiltriert. Ausbeute: 5–7 g Polyacrylnitril.

## Patentansprüche

1. Polymere, metallhaltige Polymerisationskatalysatoren, dadurch gekennzeichnet, dass sie als organisches Basispolymer ein in Wasser oder organischen Lösungsmitteln lösliches Polystyrol, Polyvinylalkohol, Polyvinyläther, Polyvinylamin, Polyacrylsäure, Polymethacrylsäure, Polyvinylpyrrolidinon, Polyäthylenglykol, Polypropylengly kol, Polyäthylenimin, Polyurethan, Polyester oder Mischpolymerisate bzw. Mischkondensate der entsprechenden Monomere enthalten, dass sie als Metallkomponente ein Metall, Metallion oder einen Metallkomplex der 3. bis 8. Nebengruppe oder der 3. und 4. Hauptgruppe des Periodensystems der Elemente, insbesondere Ti, U, V, Zr, Co, Ni, Cr, Mo, W, Al, Zn und/oder Fe enthalten, die über Hydroxyl-, Amino-, Carboxylgruppen, Alkyl- und/oder Arylphosphine oder als π-Komplexe an das Basispolymer gebunden sind, und dass sie in Wasser, Methanol, Äthanol, Tetrahydrofuran, Benzol, Toluol und Xylol löslich sind.

2. Katalysatoren nach Anspruch 1, dadurch gekennzeichnet, dass sie neben den Metallen oder Metallionen noch weitere niedermolekulare Liganden oder Anionen am Metall oder Metallion gebunden enthalten.

3. Katalysatoren nach Anspruch 2, dadurch gekennzeichnet, dass diese weiteren Liganden Kohlenmonoxid, Phosphine, insbesondere Alkyl- und/oder Arylphosphine, Halogene bzw. Halogenide, Cyanid, Olefine, Aromaten, Cyclopentadienyl oder Donormoleküle der 5. oder 6. Hauptgruppe des Periodensystems der Elemente sind.

4. Katalysatoren nach einem der vorhergehenden Ansprüche, dadurch gekennzeichnet, dass das Metall oder Metallion an ein Hydroxylgruppenenthaltendes Basispolymer als Alkoholat oder Alkoxykomplex gebunden ist.

5. Katalysatoren nach Anspruch 4, dadurch gekennzeichnet, dass sie als Hydroxylgruppenenthaltendes Basispolymer Polyethylenglykol, Monoalkoxy- bzw. Monophenoxy-polyethylenglykole, Polyvinylalkohole oder hydroxymethylierte Polystyrole enthalten.

6. Katalysatoren nach einem der vorhergehenden Ansprüche, gekennzeichnet durch ein Molekulargewicht von mindestens 1000.

7. Verfahren zur Herstellung der metallhaltigen, polymeren Katalysatoren nach den Ansprüchen 1 bis 6, dadurch gekennzeichnet, dass ein funktionelle Gruppen, insbesondere Hydroxylgruppen, enthaltendes Basispolymer in wässriger Lösung oder gelöst in organischen Lösungsmitteln mit Metallsalzen oder Metallkomplexen, insbesondere von Metallen der 3. bis 8. Nebengruppe oder der 3. und 4. Hauptgruppe des Periodensystems der Elemente, umgesetzt wird und durch Austausch eines niedermolekularen Liganden am Polymer gebunden wird.

8. Verfahren nach Anspruch 7, dadurch gekennzeichnet, dass ein Alkali- oder Erdalkalisalz des Hydroxylgruppen enthaltenden Basispolymers mit Metallsalzen oder Metallkomplexen umgesetzt wird.

9. Verwendung der Katalysatoren nach den Ansprüchen 1 bis 6, zur Polymerisation von Vinylverbindungen, Ethylen und substituierten Ethylenen.

10. Verwendung nach Anspruch 9 zur Polymerisation von Styrol, Acrylnitril, Acrylsäureester, Methacrylsäureester, Vinylacetat oder zur Copolymerisation dieser Monomere.

## Claims

1. Metal-containing polymeric catalysts for polymerisations, characterized in that they contain as organic base polymer a polystyrene, polyvinyl alcohol, polyvinyl ether, polyvinyl amine, polyacrylic acid, polymethacrylic acid, polyvinyl pyrrolidone, polyethylene glycol, polypropylene glycol, polyethylene imine, polyurethane, polyester or mixed polymerisates or mixed condensates of the corresponding monomers, which are soluble in water or in organic solvents, that they contain as metal component a metal, metal ion or metal complex of the third – eighth subgroup of the periodic table or of the third or fourth main group of the periodic table, especially Ti, U, V, Zr, Co, Ni, Cr, Mo, W, Al, Zn and/or Fe which are bound via a hydroxy, amino, carboxylgroups alkyl phosphines and/or aryl phosphines or as π-complex to the base polymer, and that they are soluble in water, methanol, ethanol, tetrahydrofurane, benzene, toluene, and xylene.

2. Catalysts according to claim 1, characterized in that they contain besides the metals or metal ions further low-molecular ligands or anions being bound to the metal or metal ion.

3. Catalysts according to claim 2, characterized in that these further ligands are carbon monoxide, phosphines, halogenes or halogenides, cyanides, olefines, aromatic compounds, cyclopentadienyl or donor molecules of the 5th or 6th main groups of the periodic table.

4. Catalysts according to one of the precedings claims, characterized in that the metal or the metal ion is bound to a hydroxyl group-containing base polymer forming an alcoholate or alkoxy complex.

5. Catalysts according to claim 4, characterized in that they contain as hydroxyl group-containing base polymer a polyethylene glycol, monoalkoxypolyethylene-glycols, monophenoxy-polyethylene glycols, polyvinyl alcohols, or hydroxy methylated polystyrenes.

6. Catalysts according to one of the precedings claims, characterized by a molecular weight of at least 1000.

7. Method of producing the metal-containing polymeric catalysts according to the claims 1 to 6, characterized in that a base polymer containing functional groups, especially hydroxy groups, is reacted in an aqueous solution or in organic solvents with metal salts or metal complexes, especially from metals of the third – eighth subgroup of the periodic table or of the third or fourth main group of the periodic table and is bound to the polymer by exchange of a low molecular ligand.

8. Process according to claim 7, characterized in that an alkali salt or alkaline earth salt of the hydroxyl group-containing base polymer is reacted with metal salts or metal complexes.

9. Use of the catalysts of claims 1 to 6 for polymerizing vinyl compounds, ethylene and substituted ethylenes.

10. Use according to claim 9 for polymerizing styrene, acrylonitrile, acrylic acid esters, methacrylic acid esters, vinyl acetate or for copolymerizing these monomers.

**Revendications**

1. Catalyseurs polymères pour polymérisations, renfermant des métaux, caractérisés par le fait qu'ils contiennent comme polymère organique de base un polystyrène, un alcool polyvinylique, un éther polyvinylique, une amine polyvinylique, un acide polyacrylique, un acide polyméthacrylique, une polyvinylpyrrolidone, un polyéthylène glycol, un polypropylène glycol, un polyéthylène imine, un polyuréthane, un polyester, ou un copolymérisat ou copolycondensat du monomère correspondant solubles dans l'eau ou dans des solvants organiques, qu'ils contiennent comme constituant métallique un métal, un ion métallique ou un complexe métallique des troisième au huitième sous-groupes du tableau périodique ou du troisième et du quatrième groupes principaux du tableau périodique, en particulier Ti, U, V, Zr, Co, Ni, Cr, Mo, W, Al, Zn et/ou Fe, qui sont liés par un groupement hydroxyle, amino, carboxyle, alkyl phosphine et/ou aryl phosphine, ou comme complexe $\pi$ au polymère de base, et par le fait qu'ils sont solubles dans l'eau, méthanol, éthanol, tétrahydrofurane, benzène, toluène et xylène.

2. Catalyseurs selon la revendication 1, caractérisés par le fait qu'ils contiennent à côte des métaux ou des ions métalliques également d'autres ligands ou anions de bas poids moléculaire liés au métal ou l'ion métallique.

3. Catalyseurs selon la revendication 2, caractérisés par le fait que l'autre ligand est de l'oxyde de carbone, une phosphine, en particulier une alkylphosphine et/ou aryl phosphine, un halogène, un halogénure, un cyanure, une oléfine, un dérivé aromatique, un dérivé de cyclopentadiényle, ou une molécule de donneur du cinquième ou sixième groupe principal du tableau périodique.

4. Catalyseurs selon une des revendications précédentes, caractérisés par le fait que le métal ou l'ion métallique est lié à un polymère de base contenant des groupements hydroxyles, formant un alcoolate ou un complexe alcoxy.

5. Catalyseurs selon la revendication 4, caractérisés par le fait que le polymère de base contenant un groupement hydroxyle est un polyéthylène glycol, un mono-alkoxy-polyéthylène glycol, un monophenoxy polyéthylène glycol, un alcool polyvinylique ou un polystyrène hydroxy méthylé.

6. Catalyseurs selon une des revendications précédentes, caractérisés par un poids moléculaire d'au moins 1000.

7. Procédé de préparation des catalyseurs polymères renfermant des métaux selon les revendications 1 à 6, caractérisé par le fait que l'on fait réagir un polymère de base contenant des groupements fonctionnels, en particulier un groupement hydroxyle, dans une solution aqueuse ou dans des solvants organiques avec un sel métallique ou un complexe métallique, en particulier un complexe avec des métaux du troisième au huitième sous-groupe du tableau périodique ou du troisième ou du quatrième groupe principal du tableau périodique et que le polymère de base est lié au polymère par échange d'un ligand de bas poids moléculaire.

8. Procédé selon la revendication 7, caractérisé par le fait que l'on fait réagir un sel alcalin ou un sel alcalino-terreux du polymère de base contenant des groupements hydroxyles avec un sel métallique ou un complexe métallique.

9. Utilisation des catalyseurs selon les revendications 1 à 6 pour la polimérisation des dérivés vinyliques, d'éthylene, et des dérivés d'éthylène substitués.

10. Utilisation selon la revendication 9 pour la polymérisation de styrène, de l'acrylonitrile, des esters d'acide acrylique, des esters d'acide méthacrylique, d'acétat de vinyle ou pour la copolymérisation de ces monomères.